# NEUE EUROPÄISCHE PATENTSCHRIFT

(11) **EP 2 208 597 B2**
(45) Veröffentlichungstag und Bekanntmachung des Hinweises auf die Entscheidung über den Einspruch: **06.05.2015**
(45) Hinweis auf die Patenterteilung: 29.02.2012
(21) Anmeldenummer: 10150709.3
(22) Anmeldetag: 14.01.2010
(51) Int. Cl.: B29C 35/08, B29C 49/64

(54) **Resonatoreinheit, Expansionsverfahren und Vorrichtung zur Erwärmung von Behältnissen**
Resonator unit, expansion method and device for heating containers
Unité de résonateur, procédé d'expansion et dispositif de chauffage de récipients

(30) Priorität: 16.01.2009 DE 102009005358
(43) Veröffentlichungstag der Anmeldung: 21.07.2010
(73) Patentinhaber: Krones AG, 93073 Neutraubling (DE)
(72) Erfinder: Senn, Konrad, 93059 Regensburg (DE); Apelsmeier, Andreas, 85131 Pollenfeld (DE); Zimmerer, Johann, 93170 Bernhardswald (DE); Winkler, Günther, 93199 Zell (DE)
(74) Vertreter: Bittner, Bernhard

(56) Entgegenhaltungen:
- WO-A1-2006/105769
- WO-A1-2009/141216
- WO-A2-2007/131701
- US-A- 4 144 434
- US-A- 4 521 746
- P.LEBAUDY,A.LEDOUX,L.ESTEL,C.BONNET,M.DELMO TTE: 'Conditionnement thermique par micro-ondes de préformes avant soufflage' RÉCENTS PROGRÈS EN GÉNIE DES PROCÉDÉS Bd. 92, 2005, PARIS-FRANCE, ISSN 291023966 Seiten 1 - 7
- L.ESTEL,A.LEDOUX,P.LEBAUDY,C.BONNET,M.DELMO TTE: 'Microwaves thermal conditioning of preforms' CHEMICAL ENGINEERING AND PROCESSING-SCIENCEDIRECT Bd. 47, 2008, FRANCE, Seiten 390 - 395
- P.LEBAUDY,L.ESTEL,A.LEDOUX: 'microwave heating of poly(ethyleneterephthalate)bottle preforms used in the thermoforming process' JOURNAL OF APPLIED POLYMER SCIENCE Bd. 108, 19 Februar 2008, WWW.INTERSCIENCE.WILEY.COM, Seiten 2408 - 2414
- 'An intelligent process design for stretch blow moulding-Microwave Processing of Plastics', Oktober 2008, UNIVERSITY OF MELBOURNE, MELBOURNE, ISBN 9783639224658 vol. D.U.ERBULUT, Seiten 109 - 116
- A.C.METAXAS: 'Microwave heating' IEE POWER ENGINEERING JOURNAL Bd. 5, September 1991,
- 'Foundation of electroheat:a unified approach', 1996, JOHN WILEY AND SONS, WEST SUSSEX,ENGLAND, ISBN 0471956449 vol. A.C.METAXAS, Seiten 105 - 106
- IEE POWER SERIES: 'Engineers'handbook of industrial microwave heating', Bd. 25, 1998, THE INSTITUTION OF ELECTRICAL ENGINEERS, LONDON,UK, ISBN 0852969163 vol. R.J.MEREDITH, Seiten 221 - 222

## Beschreibung

Die Erfindung bezieht sich auf eine Resonatoreinheit für eine Vorrichtung zum Erwärmen von Behältnissen, wie zum Beispiel Vorformlingen, insbesondere Kunststoffvorformlingen, ein Expansionsverfahren, bei welchem eine solche Resonatoreinheit eingesetzt wird, und eine solche Vorrichtung zum Erwärmen von Behältnissen.

Im Bereich der Getränke herstellenden Industrie ist man verstärkt dazu übergegangen, anstelle von Glasflaschen andere Behältnisse, wie beispielsweise Kunststoffbehältnisse und insbesondere Behältnisse aus PET (PET = Polyethylenterephthalat), für Getränke zu verwenden. Bei der Herstellung dieser Behältnisse werden zunächst Vorformlinge zur Verfügung gestellt, diese erwärmt und einem Expansionsverfahren, beispielsweise einem Streckblasverfahren, zugeführt, um auf diese Weise fertige Getränkebehältnisse zu erhalten. Dabei ist es im Stand der Technik üblich, die Vorformlinge durch eine Heizstrecke laufen zu lassen, innerhalb derer sie üblicherweise mit einer Infrarotstrahlung erwärmt werden.

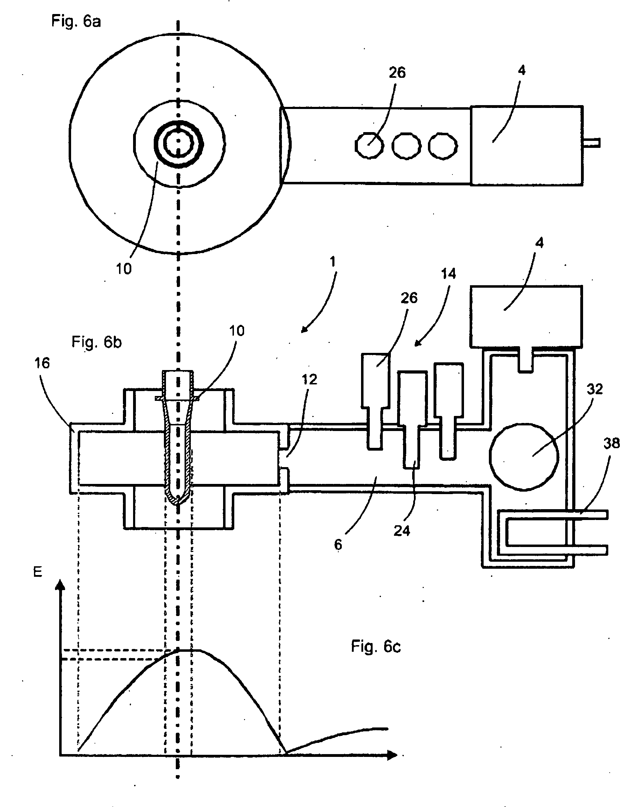

Daneben ist es jedoch im Stand der Technik auch bekannt, zur Erwärmung von Vorformlingen Mikrowellenstrahlung einzusetzen. Eine Vorrichtung hierfür ist schematisch in Fig. 6A in der Draufsicht und in Fig. 6B im Querschnitt gezeigt. Die Vorrichtung 1 weist eine Mikrowellenerzeugungseinrichtung bzw. Magnetron 4 auf, in welches bereits eine nicht abgebildete Heizeinrichtung integriert sein kann. In dem Magnetron 4 werden die Mikrowellen erzeugt und in einen Zirkulator 32 geleitet. Ausgehend von diesem Zirkulator 32 werden die Mikrowellen mit Hilfe einer nicht abgebildeten Einkoppeleinrichtung in eine Leitungseinrichtung 6 in Form eines Mikrowellenhohlleiters bzw. Rechteckhohlleiters eingeleitet. Von dort gelangen die Mikrowellen über einen Einkoppelbereich 12 in eine Resonatoreinheit 16 und zu den innerhalb der Resonatoreinheit 16 angeordneten Vorformlingen 10.

Die Temperatur der Vorformlinge 10 kann mittels eines nicht abgebildeten Temperatursensors, wie beispielsweise einem Pyrometer, gemessen werden, welches an der Resonatoreinheit angeordnet ist und insbesondere berührungslos die Temperatur der Vorformlinge 10 misst. Die von den Vorformlingen zurück kommenden Mikrowellen gelangen wiederum in den Zirkulator 32 und von dort in eine Wasserlast 38. Die Wasserlast 38 dient zum Dämpfen der Mikrowellen. Die rücklaufende Mikrowellenenergie kann mit Hilfe einer nicht abgebildeten Sensoreinrichtung, wie beispielsweise einer Diode, gemessen werden. Die gemessenen Werte können von einer ebenfalls nicht abgebildeten Steuereinrichtung aufgenommen und zur Leistungs- bzw. Energieabstimmung der Mikrowellenleistung bzw. -energie verwendet werden. Es ist jedoch auch möglich, neben oder anstelle der von der Sensoreinrichtung gemessenen Werte die von dem Temperatursensor zur Messung der Temperatur der Vorformlinge 10 ausgegebenen Werte zur Leistungs- bzw. Energieabstimmung zu verwenden. Daneben könnten die von dem Temperatursensor gemessenen Werte auch zur Veränderung der Erwärmungsphase der Vorformlinge 10 herangezogen werden.

Die Leistungs- bzw. Energieabstimmung der auf die Vorformlinge gelangenden Mikrowellenleistung bzw. -energie erfolgt im Einzelnen mittels Energieabstimmeinheiten 14, welche jeweils aus einer Antriebseinrichtung 26, beispielsweise in der Form eines Linearmotors, und einem Regulierkörper bzw. Tuning-Stift 24 bestehen. Die Regulierkörper bzw. Tuning-Stifte 24 sind an der Leitungseinrichtung 6 derart angeordnet, dass sie in variabler Länge in die Leitungseinrichtung 6 hineinragen können. Die Länge der in die Leitungseinrichtung 6 hineinragenden Regulierkörper bzw. Tuning-Stifte 24 kann durch die zuvor genannte Steuereinrichtung während des laufenden Betriebs der Vorrichtung, das heißt einer stattfindenden Erwärmung der Vorformlinge 10, je nach Bedarf geändert werden, um so die auf die Vorformlinge aufgebrachte Mikrowellenenergie zu regeln. Bei aus dem Stand der Technik bekannten Vorrichtungen 1 sind üblicherweise mindestens drei Regulierkörper bzw. Tuning-Stifte 24 zur Regelung der Mikrowellenleistung bzw. -energie eingesetzt.

Üblicherweise wird die auf die Vorformlinge 10 aufgebrachte Leistung vor Inbetriebnahme der Vorrichtung 1 eingestellt und anschließend wird die Vorrichtung 1 mit dieser festgesetzten Leistung betrieben. Bei den Energieabstimmeinheiten 14 handelt es sich üblicherweise um Impedanzabstimmeinheiten.

Hierdurch werden die Vorformlinge 10 zur Erwärmung in der Resonatoreinheit 16 mit einem elektromagnetischen Wechselfeld beaufschlagt, welches im Inneren des Materials der Vorformlinge 10 eine Anregung von Dipolen bewirkt, was zur Aufheizung der Vorformlinge 10 führt.

Aus der DE 10 2007 022 386 A1 ist eine Erwärmungsvorrichtung für Kunststoffvorformlinge bekannt. Dabei wird der zu erwärmende Bereich der Kunststoffvorformlinge zumindest während eines Teils der zeitlichen Dauer der Erwärmung in einem Resonator mit Mikrowellen beaufschlagt.

Die DE 10 2006 015 475 A1 beschreibt ein Verfahren und eine Vorrichtung zur Temperierung von Vorformlingen. Bei diesem Verfahren werden zylindrisch aufgebaute Resonatoreinheiten verwendet, die in ihrem Aufbau vergleichsweise hohe Wandstromverluste aufweisen.

Aus der Lebaudy P et al. "Conditionnement thermique par micro-ondes de preformes avant soufflage" Recent Progrès en Genie des Procédés, Numero 92 - 2005 und Erbulut D. U., "An intelligent process design for stretch blow moulding - Microwave processing of plastic" sind Vorrichtungen und Verfahren nach dem Oberbegriff der unabhängigen Ansprüche bekannt.

In Fig. 6A und Fig. 6B ist ebenfalls eine zylindrisch aufgebaute Resonatoreinheit 16 dargestellt, bei welcher ein Vorformling 10 im Wesentlichen in das Zentrum der Resonatoreinheit 16 eingebracht ist. Ist nun die Öffnung für den Vorformling 10 in dem Zentrum der Resonatoreinheit und wird der Vorformling 10 durch Mikrowellen in der Resonatoreinheit 16 erwärmt, ist die Feldverteilung des sich ausbildenden elektromagnetischen Felds in dem Vorformling 10 asymmetrisch, wie in Fig. 6C gezeigt. Dies hat auch eine asymmetrische Erwärmung des Vorformlings 10 zur Folge. Das heißt, die dem Einkoppelbereich 12 zugeordnete Seite des Vorformlings wird stärker beheizt. Eine solche Erwärmung führt zu einem asymmetrischen bzw. ungleichmäßig ausgeformten fertigen Getränkebehältnis, was teilweise unvorteilhaft ist.

Zur Lösung dieses Problems wurde es vorgeschlagen, den Vorformling um seine Achse rotieren zu lassen, um auf diese Weise eine symmetrische Erwärmung des Vorformlings zu erzielen. Jedoch hat sich gezeigt, dass auch eine solche Rotation des Vorformlings nicht immer zu einer ausreichend symmetrischen Erwärmung des Vorformlings führen kann.

Zudem müssen bisher für Vorformlinge mit unterschiedlichen Geometrien und Wanddicken unterschiedliche Resonatoreinheiten verwendet werden. Dies verursacht eine aufwändige und kostenintensive Vorhaltung von mehreren verschiedenen Resonatoreinheiten und eine ebenso aufwändige und kostenintensive Umrüstung der gesamten Resonatoreinheiten abhängig von den jeweils zum Einsatz kommenden Vorformlingen. Da die derzeit üblichen Herstellungsanlagen für derartige Behältnisse eine Vielzahl von Resonatoreinheiten, beispielsweise 40 bis 50 Stück, aufweisen, ist eine solche Vorhaltung und Umrüstung der Resonatoreinheiten stark nachteilig.

Es ist Aufgabe der vorliegenden Erfindung, eine Resonatoreinheit für eine Vorrichtung zum Erwärmen von Behältnissen, ein Expansionsverfahren, bei welchem eine solche Resonatoreinheit eingesetzt wird, und eine solche Vorrichtung zum Erwärmen von Behältnissen bereitzustellen, welche die vorstehend genannten Probleme des Standes der Technik lösen und eine symmetrische Temperaturverteilung in dem Behältnis bzw. eine auf unterschiedliche Behältnisse anpassbare Temperaturverteilung bei seiner Erwärmung bei einem Expansionsverfahren gewährleisten.

Diese Aufgabe wird durch die Resonatoreinheit gemäß Patentanspruch 1 gelöst, indem die Resonatoreinheit einen Resonatorraum aufweist. Der Resonatorraum hat eine erste Öffnung zur Aufnahme eines Behältnisses an einer vorbestimmten Position und dient zur Erwärmung des Behältnisses mittels in den Resonatorraum eingekoppelten Mikrowellen. Die Geometrie des Resonatorraums ist durch eine Einrichtung bzw. eine Ausgestaltung, insbesondere einer Ausgestaltung des Resonatorraums, zur Anpassung bzw. Änderung der Geometrie des Resonatorraums relativ zu der vorbestimmten Position des Behältnisses in der ersten Öffnung derart angepasst bzw. verändert, dass ein in dem Resonatorraum in einem Arbeitsbetrieb entstehendes elektrisches Feld - insbesondere in einem Bereich um das Behältnis - symmetrisch bezüglich des Behältnisses ist oder die Impedanz der mit einem Behältnis bestückten Resonatoreinheit für Behältnisse verschiedener Ausgestaltungen annähernd konstant ist. Erfindungsgemäß ist die Einrichtung zur Anpassung der Geometrie des Resonatorraums mindestens ein metallischer Stift, der in den Resonatorraum hineinragt, oder die Einrichtung zur Anpassung der Geometrie des Resonatorraums ist ein Ausgleichsdielektrikum, das in dem Resonatorraum angeordnet ist, wobei das Ausgleichsdielektrikum ein dielektrischer Stift ist, der in den Resonatorraum hineinragt.

Im Folgenden wird vereinfachend lediglich von einer Einrichtung zur Anpassung gesprochen, wobei darauf hingewiesen wird, dass sich dieser Begriff ebenso auf eine Ausgestaltung zur Anpassung bzw. Änderung der Geometrie des Resonatorraums beziehen kann. Bevorzugt ist das elektrische Feld in einem Bereich von zumindest einigen mm, bevorzugt von zumindest 2cm in radialer Richtung um das Behältnis bzw. eine Außenwandung des Behältnisses symmetrisch bezüglich des Behältnisses.

Die Einrichtung zur Anpassung bzw. Änderung der Geometrie des Resonatorraums ist bevorzugt abhängig von der Ausgestaltung des in den Resonatorraum einzubringenden Behältnisses. Die beiden vorgeschlagenen Vorgehensweisen, bei denen einerseits eine symmetrische Verteilung des elektrischen Feldes und andererseits eine konstante Impedanz für unterschiedliche Behältnisse geschaffen wird, können alternativ oder auch nebeneinander Anwendung finden. In beiden Fällen wird eine Anpassung des Resonatorraums, insbesondere auch bezüglich der Behältnisse, vorgeschlagen, um den Erwärmungsvorgang zu verbessern. Sowohl die symmetrische Feldverteilung als auch die gleich bleibende Impedanz verbessern den Erwärmungsvorgang.

Es wird jedoch darauf hingewiesen, dass eine Anpassung der Geometrie des Resonatorraums nicht notwendigerweise auch eine Änderung (bzw. Umstellung) der Geometrie des Resonatorraums erfordert. Eine Anpassung dieser Geometrie kann durch mehrere unterschiedliche Maßnahmen erfolgen, beispielsweise dadurch, dass der Resonatorraum selbst angepasst wird, in dem beispielsweise die Positionen von Wandungen des Resonatorraums angepasst werden. Daneben kann auch die Position des Behältnisses im Inneren des Resonatorraums geändert bzw. angepasst werden. Daneben werden erfindungsgemäß auch zusätzliche Materialien in den Resonatorraum eingebracht, wodurch durch dieses Einbringen ebenfalls die Geometrie des Resonatorraums, insbesondere hinsichtlich der Feldverteilung der Mikrowellen in seinem Inneren, angepasst wird.

Vorzugsweise ist der Resonatorraum in einer radialen Umgebung des Behältnisses angepasst und insbesondere auch in einem Bereich entlang der Längsrichtung des Behältnisses, der zwischen einem ersten Begrenzungsrand des Behältnisses und einem zweiten Begrenzungsrand des Behältnisses liegt. Die aus dem Stand der Technik bekannten Erwärmungseinrichtung, die auf Basis von Mikrowellen arbeiten, beschreiben keinerlei Modifikationen des Resonatorraums. Hierbei ist zu berücksichtigen, dass derartige Mikrowellenöfen auch nicht mit solchen Mikrowellenöfen vergleichbar sind, welche beispielsweise im Haushalt Anwendung finden, da die zur Erwärmung der Kunststoffvorformlinge nötige Leistung wesentlich höher ist als die Leistung, welche etwa zur Erwärmung von Getränken verwendet wird.

Vorteilhafte Ausgestaltungen der Resonatoreinheit sind in den abhängigen Patentansprüchen dargelegt.

Vorzugsweise können die Behältnisse mittels ihres Materials und/oder ihrer Geometrie verschieden ausgestaltet sein.

Die Einrichtung zur Anpassung bzw. Änderung der Geometrie des Resonatorraums kann ein Ausgleichsdielektrikum sein, das in dem Resonatorraum angeordnet ist. Hierbei kann das Ausgleichsdielektrikum ein in den Resonatorraum hineinragender Stift sein. Das Ausgleichsdielektrikum kann aus Polytetrafluorethylen oder Polypropylen gefertigt sein. Allgemein kann das Ausgleichsdielektrikum aus einem Material mit niedrigem Verlustfaktor bestehen.

Zudem kann die Einrichtung zur Änderung der Geometrie des Resonatorraums mindestens ein metallischer Stift sein, der in den Resonatorraum hineinragt.

Vorzugsweise ragen der dielektrische Stift und/oder der mindestens eine metallische Abstimmstift in variabler Länge in den Resonatorraum hinein.

Darüber hinaus ist es möglich, dass die Einrichtung zur Anpassung bzw. Änderung der Geometrie des Resonatorraums eine zweite Öffnung ist, über welche die Mikrowellen in den Resonatorraum eingekoppelt werden. Die zweite Öffnung kann eine variable Blende oder eine austauschbare Blende sein. Da die Resonanzfrequenz und Güte des Resonators auch maßgeblich mit der Größe der besagten Öffnung bzw. Blende zusammenhängt, kann der Resonator in bestimmten Fällen auch mit einer Veränderung dieser Blendengeometrie verändert werden.

Vorzugsweise bewirkt die Einrichtung zur Anpassung bzw. Änderung der Geometrie des Resonatorraums, dass der Resonatorraum, relativ zu der vorbestimmten Position des Vorformlings bzw. zu einer Längsrichtung des Vorformlings in der ersten Öffnung, eine exzentrische Geometrie hat. Zudem kann die Resonatoreinheit relativ zu der vorbestimmten Position des Vorformlings in der ersten Öffnung eine exzentrische Geometrie haben. Dabei ist es auch möglich, dass das Maß dieser Exzentrität veränderbar ist.

Die zuvor genannte Aufgabe wird ferner durch ein Expansionsverfahren nach Patentanspruch 7 gelöst, bei welchem ein fertiges Behältnis durch Expansion eines Vorformlings des Behältnisses hergestellt wird, der mittels Mikrowellen in der Resonatoreinheit erwärmt wird, die wie zuvor beschrieben ausgestaltet ist. Vorzugsweise umfasst das Expansionsverfahren noch das Strecken des Behältnisses und/oder eine Blasumformung des Vorformlings zu einem Behältnis.

Die zuvor genannte Aufgabe wird ferner durch eine Vorrichtung zur Erwärmung von Behältnissen gemäß Patentanspruch 8 gelöst, welche aufweist: mindestens eine Mikrowellenerzeugungseinheit zur Erzeugung eines elektromagnetischen Wechselfelds in Form von Mikrowellen, eine Leitungseinrichtung zur Übertragung der von der Mikrowellenerzeugungseinheit erzeugten Mikrowellen an eine Resonatoreinheit, und eine Transporteinrichtung zum Transport der Behältnisse in die Resonatoreinheit. Die Resonatoreinheit ist hierbei ausgestaltet, wie zuvor beschrieben.

Mit der zuvor beschriebenen Resonatoreinheit für eine Vorrichtung zur Erwärmung von Behältnissen, das Expansionsverfahren und eine solche Vorrichtung zur Erwärmung von Behältnissen ist es möglich, eine symmetrische Temperaturverteilung in einem Vorformling bei seiner Erwärmung bei einem Expansionsverfahren zur Herstellung eines Behältnisses zu erzielen. Zudem wird die Umrüstung der Resonatoreinheiten beim Wechsel der Sorte der Behältnisse in den Resonatoreinheiten stark vereinfacht.

Nachfolgend wird die Erfindung unter Bezugnahme auf die beiliegende Zeichnung ausführlicher beschrieben. Es zeigen:
- Fig. 1: eine schematische Darstellung einer Vorrichtung zur Erwärmung von Behältnissen;
- Fig. 2A: eine schematische Draufsicht auf eine Resonatoreinheit gemäß einem ersten Ausführungsbeispiel der vorliegenden Erfindung;
- Fig. 2B: einen schematischen Querschnitt der Resonatoreinheit gemäß dem ersten Ausführungsbeispiel der vorliegenden Erfindung;
- Fig. 2C: eine schematische Darstellung der Feldverteilung des elektromagnetischen Felds in der in Fig. 2B gezeigten Resonatoreinheit im Betrieb;
- Fig. 3: einen schematischen Teilquerschnitt einer Resonatoreinheit gemäß dem ersten Ausführungsbeispiel der vorliegenden Erfindung;
- Fig. 4: einen schematischen Teilquerschnitt einer Resonatoreinheit gemäß einer ersten Modifikation des ersten Ausführungsbeispiels der vorliegenden Erfindung;
- Fig. 5A: eine schematische Draufsicht auf eine Resonatoreinheit gemäß einem zweiten Ausführungsbeispiel;
- Fig. 5B: einen schematischen Querschnitt einer Resonatoreinheit gemäß dem zweiten Ausführungsbeispiel;
- Fig. 5C: eine schematische Darstellung der Feldverteilung des elektromagnetischen Felds in der in Fig. 5B gezeigten Resonatoreinheit im Betrieb;
- Fig. 6A: eine schematische Draufsicht auf eine Vorrichtung zur Erwärmung von Behältnissen gemäß dem Stand der Technik;

- Fig. 6B: einen schematischen Querschnitt einer Vorrichtung zur Erwärmung von Behältnissen gemäß dem Stand der Technik;
- Fig. 6C: eine schematische Darstellung der Feldverteilung des elektromagnetischen Felds in der in Fig. 6B gezeigten Resonatoreinheit im Betrieb.

### Erstes Ausführungsbeispiel

In der folgenden Beschreibung sind für die gleichen Teile wie in Fig. 6A bis Fig. 6C die gleichen Bezugszeichen verwendet.

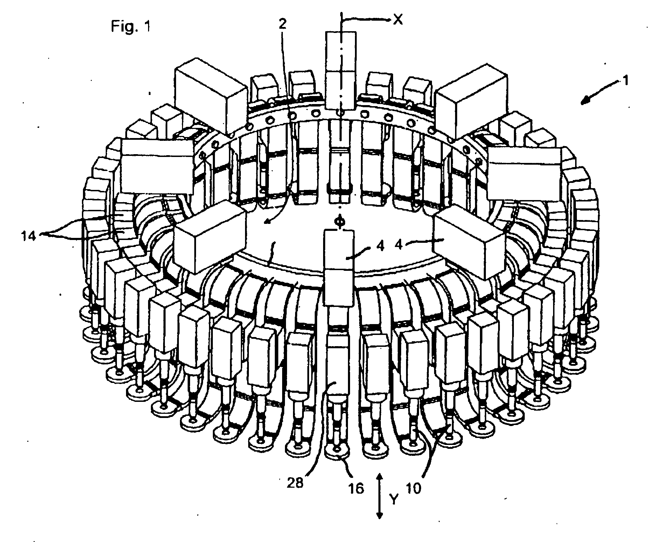

Fig. 1 zeigt eine Vorrichtung 1 zur Erwärmung von Behältnissen 10 bzw. Vorformlingen 10 für Behältnisse. Im Folgenden wird die Funktion der Vorrichtung 1 an dem Beispiel von Vorformlingen 10 beschrieben, auch wenn die Vorrichtung 1 auch zur Erwärmung von bereits fertig gestellten Behältnissen 10 verwendet werden kann.

Wie in Fig. 1 dargestellt, weist die Vorrichtung 1 eine Vielzahl von Mikrowellenerzeugungseinrichtungen 4, beispielsweise ein Magnetron, auf. Die von den Mikrowellenerzeugungseinrichtungen 4 erzeugten Mikrowellen gelangen über Leitungseinrichtungen zu Resonatoreinheiten 16 und von diesen aus in Vorformlinge 10. Die Vorformlinge 10 werden mittels der Energie der Mikrowellen erwärmt, wie zuvor beschrieben, und durch beispielsweise ein Expansionsverfahren in fertige Behältnisse für beispielsweise Getränke geformt.

Das Bezugszeichen 2 in Fig. 1 bezeichnet eine Transporteinrichtung, welche bewirkt, dass die einzelnen Behältnissen bzw. Vorformlinge 10 um eine Drehachse X gedreht werden. Das Bezugszeichen 14 bezieht sich in seiner Gesamtheit auf Energieabstimmeinheiten, welche zur Regulierung der auf die Vorformlinge 10 aufgebrachten Energien dienen, wie im Zusammenhang mit dem Stand der Technik in Bezug auf Fig. 6A bis Fig. 6C beschrieben. Mit Hilfe von Antriebseinheiten 28 kann die Position der Vorformlinge 10 gegenüber den Resonatoreinheiten 16 in der Richtung Y, welche parallel zu der Drehachse X verläuft, verschoben werden.

Im Übrigen ist die Vorrichtung 1 mit Ausnahme der Resonatoreinheit 16 auf die gleiche Weise aufgebaut wie die Vorrichtung des Standes der Technik, die in Fig. 6A bis Fig. 6C veranschaulicht ist.

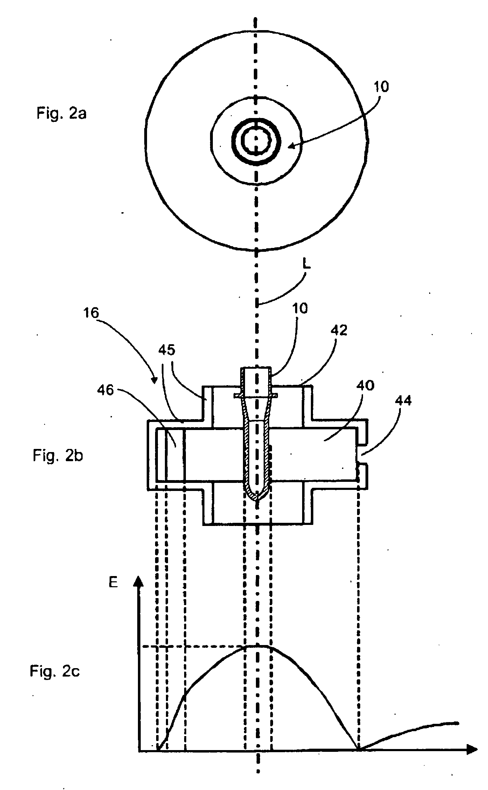

Die Resonatoreinheit 16 gemäß dem ersten Ausführungsbeispiel der Erfindung ist in Fig. 2A in der Draufsicht und in Fig. 2B im Querschnitt dargestellt. Wie in Fig. 2B gezeigt, hat die Resonatoreinheit 16 einen Resonatorraum 40 mit einer ersten Öffnung 42, über welche ein Behältnis bzw. Vorformling 10 in den Resonatorraum 40, insbesondere durch Bewegen des Vorformlings entlang seiner Längsrichtung L, eingebracht werden kann. Der Vorformling 10 wird an einer vorbestimmten Position in der ersten Öffnung 42 angeordnet. Es wäre jedoch auch möglich, dass sich die Position des Vorformlings innerhalb des Resonatorraums während des Erwärmungsvorgangs ändert. So könnte der Vorformling während des Erwärmungsvorgangs entlang seiner Längsachse bewegt und/oder um diese Längsachse gedreht werden.

Die erste Öffnung 42 hat einen geringeren Durchmesser als der Resonatorraum 40. Zudem hat der Resonatorraum eine zweite Öffnung 44, welche an die Leitungseinrichtung 6 angeschlossen werden kann, wie in Fig. 6B gezeigt. Die zweite Öffnung 44 kann als Blende ausgeführt sein. Der Resonatorraum 40 ist gleich dem Mikrowellenwirkbereich der Resonatoreinheit 16, das heißt dem Bereich, in welchem ein in die Resonatoreinheit 16 bzw. den Resonatorraum 40 aufgenommener Vorformling 10 durch Mikrowellen erwärmt werden kann. Wie in Fig. 2B gezeigt, muss der Resonatorraum 40 nicht vollständig durch Wände 45 abgeschlossen sein. Es wäre jedoch auch möglich, dass ein Öffnungsquerschnitt der zweiten Öffnung 44 variabel ist oder eine die zweite Öffnung bildende Blende austauschbar ist. Weiterhin wäre es auch möglich, dass vor der zweiten Öffnung 44 eine weitere Blende mit veränderbarem Querschnitt angeordnet ist. Diese weitere Blende könnte dabei innerhalb des Hohlleiters 6 vorgesehen sein (vgl. Fig. 6b). Weiterhin könnte eine entsprechende Blende auch innerhalb des Resonatorraums 40 angeordnet sein.

Wie außerdem in Fig. 2B gezeigt, ist in dem von der zweiten Öffnung 44 abgewandten Teil der Resonatoreinheit 16 ein Ausgleichsdielektrikum 46 vorgesehen. Das Material des Ausgleichsdielektrikums 46 kann aus einem Polymer, wie beispielsweise Polytetrafluorethylen (PTFE) oder einem Polyolefin, wie beispielsweise Polypropylen (PP) gefertigt sein. Ein solches Material hat einen niedrigen Verlustfaktor, wodurch sich das Ausgleichsdielektrikum 46 bei Beaufschlagung mit Mikrowellen nicht erwärmt oder nur geringfügig. In dem Ausgleichsdielektrikum 46 ist die Wellenlänge der Mikrowellen kürzer als in dem mit Raumluft gefüllten Resonatorraum 40, so dass der Resonatorraum 40 in dem Teil der Resonatoreinheit 16, in welchem sich das Ausgleichsdielektrikum 46 befindet, größer wirkt.

Das Ausgleichsdielektrikum 46 bewirkt, dass die Impedanz der mit einem Vorformling 10 bestückten Resonatoreinheit 16 bei Verwendung von Vorformlingen 10 mit verschiedenen Geometrien und Wanddicken annähernd konstant gehalten wird. Das heißt, das Ausgleichsdielektrikum 46 ist eine Einrichtung zur Änderung der Geometrie des Resonatorraums 40. Insbesondere kann auf diese Weise die gleiche Resonatoreinheit 16 Verwendung finden, wenn das Ausgleichsdielektrikum 46 beim Wechsel von einem dickwandigen zu einem dünnwandigen Vorformling 10 in die Resonatoreinheit 16 eingebracht wird. Wie aus Fig. 2A und Fig. 2B ersichtlich, kann auf diese Weise auch der Vorformling 10 zentrisch in die zweite Öffnung 44 aufgenommen werden.

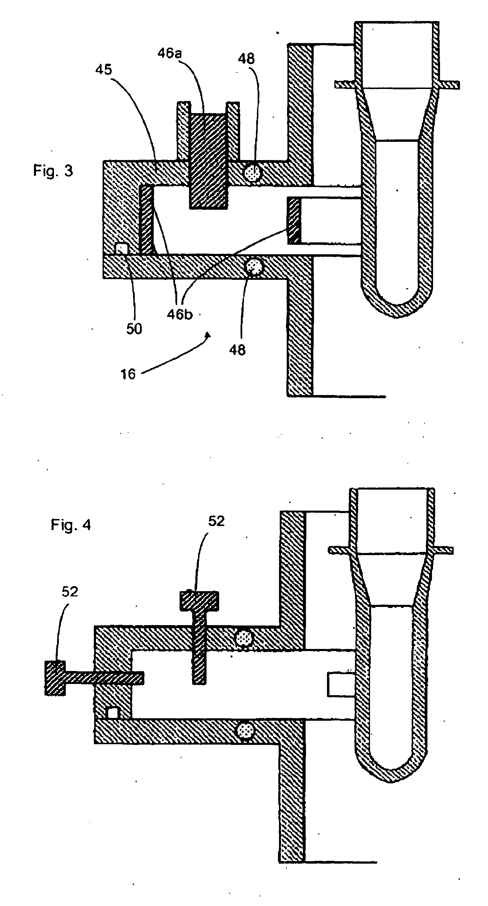

Fig. 3 zeigt einen vergrößerten Querschnitt des von der zweiten Öffnung 44 abgewandten Teils der Resonatoreinheit 16. Die Resonatoreinheit 16 weist in ihrer Wand 45 ein Ausgleichsdielektrikum 46 auf, das als Stift 46b ausgebildet ist. Zudem weist die Resonatoreinheit 16 zwei Ausgleichsdielektrika 46 auf, die als Ring 46b ausgebildet sind. Der Ring 46b kann beispielsweise ein Einlagering sein, der in den Resonatorraum 40 bei der Wand 45 eingelegt oder befestigt wird, oder der Ring 46b kann an einer Halteeinrichtung im Inneren des Resonatorraums derart befestigt werden, dass er sich bei Einsatz des Vorformlings 10 in die Resonatoreinheit 16 in dem von der zweiten Öffnung 44 abgewandten Teil der Resonatoreinheit 16 befindet, wie in Fig. 3 gezeigt. Es wäre jedoch auch möglich, dass der Ring 46b als ein das Behältnis 10 umgebender Ring ausgebildet ist. Die Ausgleichsdieelektrika 46a, 46b können gemeinsam vorgesehen sein.

In der Wand 45 der Resonatoreinheit 16 ist in Fig. 3 eine Kühlmittelbohrung 48 vorgesehen, durch die ein Kühlmittel zur Kühlung der Resonatoreinheit 16 fließen kann.

Ferner ist aus Fig. 3 ersichtlich, dass die Resonatoreinheit 16 zweiteilig aufgebaut sein kann. In einem der Teile der Resonatoreinheit 16, in dem oberen Teil in Fig. 3, ist eine Nut 50 vorgesehen. Durch diese Nut 50 kann der Anpressdruck zwischen den beiden Teilen der Resonatoreinheit 16 erhöht werden, da die Nut 50 die Auflagefläche einer Verschraubung der beiden Teile der Resonatoreinheit 16 reduziert. Auf diese Weise wird der Stromwiderstand in den Wänden der Resonatoreinheit 16 reduziert.

Bei einer Ausführung der Resonatoreinheit 16, wie zuvor beschrieben, kann die in Fig. 2C dargestellte symmetrische Feldverteilung des elektromagnetischen Feldes E in dem Resonatorraum 40 erzielt werden. Aufgrund dessen ergibt sich auch eine symmetrische Temperaturverteilung in einem Vorformling 10, wenn er in die zuvor beschriebene Resonatoreinheit 16 eingesetzt ist und diese bei einem Expansionsverfahren verwendet wird, in welchem aus dem Vorformling 10 ein fertiges Behältnis für beispielsweise Getränke hergestellt wird. Es wäre jedoch auch möglich, gezielt Dielektrika einzusetzen, um eine asymmetrische Feldverteilung und damit eine gezielt asymmetrische Erwärmung des Vorformlings zu erreichen. Dies könnte beispielsweise interessant sein, wenn Behältnisse mit einem von einem kreisförmigen Querschnitt abweichenden Querschnitt erzeugt werden sollen.

In einer ersten Modifikation des ersten Ausführungsbeispiels weist die Resonatoreinheit 16 einen oder mehrere metallische Stifte 52 auf, die in den Resonatorraum 40 hineinragen. In Fig. 4 sind als nicht einschränkendes Beispiel zwei metallische Stifte 52 gezeigt. In diesem Fall sind der/ die metallische/n Stift/e die Einrichtung zur Änderung der Geometrie des Resonatorraums. Die metallischen Stifte 52 können alle oder auch nur teilweise als Abstimmschrauben ausgeführt sein und anstelle oder zusätzlich zu dem Ausgleichsdielektrikum 46 in der Resonatoreinheit 16 vorgesehen sein. Beim Wechsel zu einer anderen Sorte bzw. Ausgestaltung des Vorformlings 10 werden die Stifte 52 je nach Bedarf so angeordnet, dass sie mit der erforderlichen Länge in den Resonatorraum 40 hineinragen. Auch auf diese Weise kann die Impedanz der Resonatoreinheit 16 annähernd konstant gehalten werden, auch wenn die Resonatoreinheit 16 mit Behältnissen verschiedener Ausgestaltungen bestückt wird, wie zuvor beschrieben. Diese metallischen Stifte stellen daher innerhalb des Resonatorraums vorgesehene dielektrische "Tuningstifte" dar, die unterschiedlich weit in den Resonatorraum eintauchen können.

In einer zweiten Modifikation des ersten Ausführungsbeispiels kann die Resonatoreinheit 16 anstelle oder zusätzlich zu dem Ausgleichsdielektrikum 46 oder dem einen oder mehreren metallischen bzw. dielektrischen Abstimmstiften 52 auch eine variable Blende oder eine austauschbare Blende aufweisen. Das heißt, die Geometrie der Resonatoreinheit 16 bzw. des Resonatorraums 40 wird beim Wechsel des Vorformlings 10 mittels einer Veränderung der Blendengeometrie verändert. Hierdurch kann die Resonanzfrequenz und Güte der Resonatoreinheit 16 über die Größe der Blende verändert werden. Auch auf diese Weise kann die Impedanz der Resonatoreinheit 16 annähernd konstant gehalten werden, auch wenn die Resonatoreinheit 16 mit Behältnissen verschiedener Ausgestaltungen bestückt wird, wie zuvor beschrieben. In diesem Fall ist die Blende die Einrichtung zur Änderung der Geometrie des Resonatorraums.

### Zweites Ausführungsbeispiel

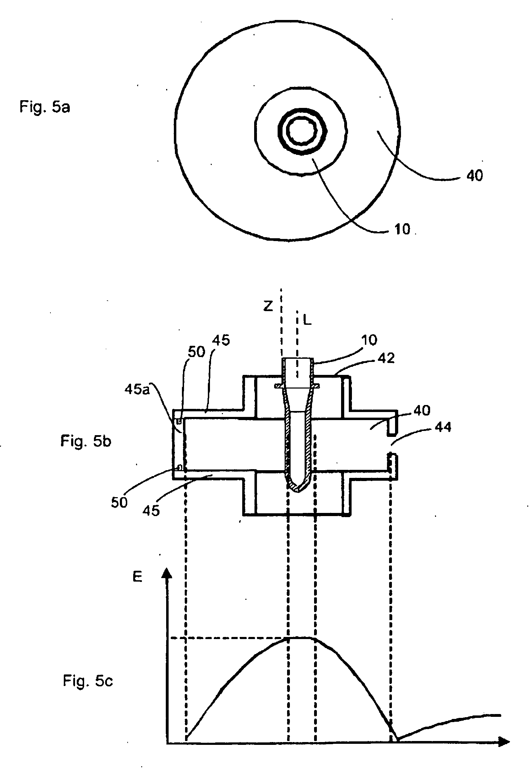

Das in Fig. 5A bis Fig. 5C gezeigte zweite Ausführungsbeispiel ist bis auf die nachfolgend beschriebenen Unterschiede zu dem ersten Ausführungsbeispiel identisch mit dem ersten Ausführungsbeispiel.

Wie in Fig. 5A und Fig. 5B gezeigt, ist die erste Öffnung 42 nicht in dem Zentrum der zylindrischen Resonatoreinheit 16 sondern exzentrisch zu dem Zentrum der zylindrischen Resonatoreinheit 16 angeordnet. Damit ist auch das Behältnis 10 bzw. dessen Längsachse L nicht symmetrisch sondern exzentrisch zu dem Zentrum (Linie Z) des Resonatorraums.

Dies kann zum einen durch eine Herstellung einer Resonatoreinheit 16 bewerkstelligt werden, die relativ zu der vorbestimmten Position des Vorformlings 10 in der ersten Öffnung 42 eine feste exzentrische Geometrie hat, wie als Beispiel in Fig. 5A in der Draufsicht und in Fig. 5B im Querschnitt gezeigt. In diesem Fall ist die Anordnung der ersten Öffnung 42 die Einrichtung zur Anpassung der Geometrie des Resonatorraums 40.

Zudem kann die erste Öffnung 42 mittels einer weiteren Blende gegenüber den Wänden 45 des Resonatorraums 40 verschiebbar sein, so dass die Resonatoreinheit 16 ebenfalls relativ zu der vorbestimmten Position des Vorformlings 10 in der ersten Öffnung 42 eine feste exzentrische Geometrie hat, wie als Beispiel in Fig. 5A in der Draufsicht und in Fig. 5B im Querschnitt gezeigt. In diesem Fall ist ebenfalls die Anordnung der ersten Öffnung 42 bzw. die Blende die Einrichtung zur Anpassung bzw. Änderung der Geometrie des Resonatorraums 40.

Außerdem kann die in Fig. 5A und Fig. 5B gezeigte Ausgestaltung der Resonatoreinheit 16 auch bewerkstelligt werden, indem die Resonatoreinheit 16 eine variable Wand 45a aufweist, die senkrecht und zwischen den horizontalen Wänden 45 in Fig. 5B angeordnet ist. Die variable Wand 45a ist an ihren beiden an die Wände 45 angrenzenden Stirnflächen mit jeweils einer Nut 50 zu versehen, wie sie in Fig. 3 für nur eine Wandstirnfläche gezeigt ist. Durch diese Nut 50 kann der Anpressdruck zwischen der variablen Wand 45a und den beiden horizontalen Wänden 45 erhöht werden, da die Nut 50 die Auflagefläche einer Verschraubung der Teile der Resonatoreinheit 16 reduziert. Auf diese Weise wird der Stromwiderstand in den Wänden der Resonatoreinheit 16 reduziert. Die variable Wand 45a dient als Einrichtung zur Anpassung bzw. Änderung der Geometrie des Resonatorraums.

Wie in Fig. 5A und Fig. 5B gezeigt, hat die Resonatoreinheit 16 relativ zu der vorbestimmten Position des Vorformlings 10 in der ersten Öffnung 42 eine exzentrische Geometrie. Anders ausgedrückt, in Fig. 5A und Fig. 5B ist die Resonatoreinheit 16 zylindrisch aufgebaut und die vorbestimmte Position des Vorformlings 10 in der ersten Öffnung 42 ist exzentrisch zum Zentrum der zylindrischen Resonatoreinheit 16 angeordnet.

Auch auf diese Weise kann die Impedanz der Resonatoreinheit 16 annähernd konstant gehalten werden, auch wenn die Resonatoreinheit 16 mit Behältnissen verschiedener Ausgestaltungen bestückt wird, wie zuvor beschrieben. Daher kann auch so die in den Fig. 5c gezeigte symmetrische Feldverteilung erreicht werden.

### Drittes Ausführungsbeispiel

Zur Erzielung einer symmetrischen Temperaturverteilung in einem Vorformling 10 bei seiner Erwärmung bei einem Expansionsverfahren zur Herstellung eines Behältnisses kann der Vorformling 10 auch exzentrisch zu dem Zentrum des Resonatorraums 40 angeordnet werden.

### Viertes Ausführungsbeispiel

Anstelle einer zylindrischen Ausgestaltung der Resonatoreinheit 16 kann die Resonatoreinheit 16 auch eine elliptische Form haben. Auch hiermit kann eine symmetrische Temperaturverteilung in dem Vorformling 10 bei seiner Erwärmung bei einem Expansionsverfahren zur Herstellung eines Behältnisses erzielt werden.

Die in dem Ausführungsbeispiel der vorliegenden Erfindung beschriebenen Resonatoreinheiten 16 können bei einer Vorrichtung 1 zur Erwärmung von Behältnissen gemäß dem Stand der Technik zum Einsatz kommen, wie sie in Fig. 6A bis Fig. 6C gezeigt und in der Beschreibungseinleitung beschrieben ist. Wie aus der vorangehenden Beschreibung der Ausführungsbeispiele der vorliegenden Erfindung ersichtlich, ist keine oder nur eine sehr geringe Anpassung der Vorrichtung 1 selbst erforderlich, wenn bei ihr die erfindungsgemäßen Resonatoreinheiten 16 Verwendung finden.

Im Unterschied zu der in Fig. 6A bis Fig. 6C dargestellten Vorrichtung 1, bei der mindestens drei Regulierkörper bzw. Tuning-Stifte 24 zur Regelung der Mikrowellenleistung bzw. - energie eingesetzt werden, ist es bei der erfindungsgemäßen Vorrichtung auch ausreichend nur zwei Regulierkörper bzw. Tuning-Stifte 24 zu verwenden.

Die erfindungsgemäßen Resonatoreinheiten 16 können bei einem Expansionsverfahren Verwendung finden, bei welchem ein fertiges Behältnis durch Expansion eines mittels Mikrowellen in einer Resonatoreinheit erwärmten Vorformlings 10 des fertigen Behältnisses hergestellt wird. Die Expansion kann durch Strecken des Vorformlings 10 und Blasen in den Vorformling 10 erfolgen.

Die zuvor beschriebenen Ausgestaltungen der Resonatoreinheit, der Vorrichtung zur Erwärmung von Vorformlingen für Behältnisse, und des Expansionsverfahrens können sowohl einzeln als auch in allen möglichen Kombinationen der zuvor genannten einzelnen Ausgestaltungen Verwendung finden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Transporteinrichtung
- 4: Mikrowellenerzeugungseinrichtung
- 6: Leitungseinrichtung
- 10: Behältnis, Vorformling
- 12: Einkoppelbereich
- 14: Energieabstimmeinheit
- 16: Resonatoreinheit
- 24: Tuning-Stifte
- 26: Antriebseinheit
- 32: Zirkulator
- 38: Wasserlast
- 40: Resonatorraum
- 42: erste Öffnung
- 44: zweite Öffnung, Blende
- 45: Wand
- 45a: Wand
- 46: Ausgleichsdielektrikum
- 46a: Stift
- 46b: Ring
- 48: Kühlmittelbohrung
- 50: Nut
- 52: Abstimmstift
- X: Drehachse
- Y: Richtung
- E: elektrisches Feld

## Patentansprüche

1. Resonatoreinheit (16) zum Erwärmen von Behältnissen, mit einem Resonatorraum (40), mit einer ersten Öffnung (42) zur Aufnahme eines Behältnisses (10) an einer vorbestimmten Position und zur Erwärmung des Behältnisses (10) mittels in den Resonatorraum (40) eingekoppelten Mikrowellen und mit einer zweiten Öffnung (44), über welche die Mikrowellen in den Resonatorraum (40) eingekoppelt werden, wobei die Geometrie des Resonatorraums (40) relativ zu der vorbestimmten Position des Behältnisses (10) in der ersten Öffnung (42) mit einer Einrichtung zur Anpassung der Geometrie derart angepasst ist, dass ein in dem Resonatorraum (40) in einem Arbeitsbetrieb entstehendes elektrisches Feld symmetrisch bezüglich des Behältnisses ist oder die Impedanz der mit einem Behältnis (10) bestückten Resonatoreinheit (16) für Behältnisse (10) verschiedener geometrischer Ausgestaltungen annähernd konstant ist, **dadurch gekennzeichnet, dass**
die Einrichtung zur Anpassung der Geometrie des Resonatorraums (40) mindestens ein metallischer Stift (52) ist, der in den Resonatorraum (40) hineinragt, oder die Einrichtung zur Anpassung der Geometrie des Resonatorraums (40) ein Ausgleichsdielektrikum (46) ist, das in dem Resonatorraum (40) angeordnet ist, wobei das Ausgleichsdielektrikum (46) ein dielektrischer Stift (46b) ist, der in den Resonatorraum (40) hineinragt.

2. Resonatoreinheit (16) nach Anspruch 1, wobei die Behältnisse (10) mittels ihres Materials verschieden ausgestaltet sind.

3. Resonatoreinheit nach einem der Ansprüche 1 bis 2, wobei das Ausgleichsdielektrikum (46) aus Polytetrafluorethylen oder Polypropylen gefertigt ist.

4. Resonatoreinheit nach Anspruch 1 , wobei der dielektrische Stift (46b) und/oder der mindestens eine metallische Stift (52) in variabler Länge in den Resonatorraum (40) hineinragen können.

5. Resonatoreinheit nach Anspruch 1, wobei die zweite Öffnung (44) eine variable Blende oder eine austauschbare Blende ist.

6. Resonatoreinheit nach Anspruch 1, wobei die Einrichtung zur Anpassung der Geometrie des Resonatorraums (40) bewirkt, dass der Resonatorraum (40), relativ zu der vorbestimmten Position des Behältnisses (10) in der ersten Öffnung (42), eine exzentrische Geometrie hat.

7. Expansionsverfahren, bei welchem ein Behältnis durch Expansion eines mittels Mikrowellen in einer Resonatoreinheit (16) erwärmten Vorformlings (10) des Behältnisses hergestellt wird, wobei die Resonatoreinheit (16) aufweist
einen Resonatorraum, der eine erste Öffnung zur Aufnahme eines Behältnisses (10) an einer vorbestimmten Position aufweist und zur Erwärmung des Behältnisses (10) mittels in den Resonatorraum (40) eingekoppelten Mikrowellen dient, und
eine Einrichtung zur Anpassung der Geometrie des Resonatorraums (40) relativ zu der vorbestimmten Position des Behältnisses (10) in der ersten Öffnung, derart, dass ein in dem Resonatorraum (40) in einem Arbeitsbetrieb entstehendes elektrisches Feld symmetrisch bezüglich des Behältnisses ist oder die Impedanz der mit einem Behältnis (10) bestückten Resonatoreinheit (16) für Behältnisse (10) verschiedener geometrischer Ausgestaltungen annähernd konstant ist, **dadurch gekennzeichnet, dass**
die Einrichtung zur Anpassung der Geometrie des Resonatorraums (40) mindestens ein metallischer Stift (52) ist, der in den Resonatorraum (40) hineinragt, oder die Einrichtung zur Anpassung der Geometrie des Resonatorraums (40) ein Ausgleichsdielektrikum (46) ist, das in dem Resonatorraum (40) angeordnet ist, wobei das Ausgleichsdielektrikum (46) ein dielektrischer Stift (46b) ist, der in den Resonatorraum (40) hineinragt.

8. Vorrichtung (1) zur Erwärmung von Behältnissen (10), welche aufweist mindestens eine Mikrowellenerzeugungseinheit (4) zur Erzeugung eines elektromagnetischen Wechselfelds in Form von Mikrowellen, einer Leitungseinrichtung (6) zur Übertragung der von der Mikrowellenerzeugungseinheit (4) erzeugten Mikrowellen an eine Resonatoreinheit (16), und einer Transporteinrichtung (2) zum Transport der Behältnisse (10) in die Resonatoreinheit (16),
**dadurch gekennzeichnet, dass**
die Resonatoreinheit (16) nach wenigstens einem der vorangegangenen Ansprüche 1 - 6 ausgebildet ist.

## Claims

1. Resonator unit (16) for heating containers, comprising a resonator chamber (40) with a first opening (42) for receiving a container (10) at a predefined position and for heating the container (10) by means of microwaves coupled into the resonator chamber (40), and with a second opening (44) via which the microwaves are coupled into the resonator chamber (40), wherein the geometry of the resonator chamber (40) relative to the predefined position of the container (10) in the first opening (42) is adapted by a device for adapting the geometry so that an electric field produced in the resonator chamber (40) in a working mode is symmetrical in relation to the container or the impedance of the resonator unit (16) equipped with a container (10) is approximately constant for containers (10) of different geometric configurations, **characterized in that** the device for adapting the geometry of the resonator chamber (40) is at least one metal pin (52), which protrudes into the resonator chamber (40) or the device for adapting the geometry of the resonator chamber (40) is at least a compensating dielectric (46) which is arranged in the resonator chamber (40), wherein the compensating dielectric (46) is a dielectric pin (46b) which protrudes into the resonator chamber (40).

2. Resonator unit (16) according to claim 1, wherein the containers (10) are configured differently by means of the material thereof.

3. Resonator unit according to one of claims 1 and 2, wherein the compensating dielectric (46) is made from polytetrafluoroethylene or polypropylene.

4. Resonator unit according to claim 1, wherein the dielectric pin (46b) and/or the at least one metal pin (52) can protrude into the resonator chamber (40) to varying lengths.

5. Resonator unit according to claim 1, wherein the second opening (44) is a variable diaphragm or an exchangeable diaphragm.

6. Resonator unit according to claim 1, wherein the device for adapting the geometry of the resonator chamber (40) brings about the situation whereby the resonator chamber (40) has an eccentric geometry relative to the predefined position of the container (10) in the first opening (42).

7. Expansion process, in which a container is produced by expanding a preform (10) of the container which is heated by means of microwaves in a resonator unit (16), wherein the resonator unit (16) comprises
a resonator chamber which has a first opening for receiving a container (10) in a predefined position and which serves for heating the container (10) by means of microwaves coupled into the resonator chamber (40), and
a device for adapting the geometry of the resonator chamber (40) relative to the predefined position of the container (10) in the first opening so that an electric field produced in the resonator chamber (40) in a working mode is symmetrical in relation to the container or the impedance of the resonator unit (16) equipped with a container (10) is approximately constant for containers (10) of different geometric configurations, **characterized in that** the device for adapting the geometry of the resonator chamber (40) is at least one metal pin (52), which protrudes into the resonator chamber (40) or the device for adapting the geometry of the resonator chamber (40) is a compensating dielectric (46) which is arranged in the resonator chamber (40), wherein the compensating dielectric (46) is a dielectric pin (46b) which protrudes into the resonator chamber (40).

8. Apparatus (1) for heating containers (10), which comprises at least one microwave generation unit (4) for generating an alternating electromagnetic field in the form of microwaves, a conducting device (6) for transmitting the microwaves generated by the microwave generation unit (4) to a resonator unit (16), and a transport device (2) for transporting the containers (10) into the resonator unit (16), **characterised in that** the resonator unit (16) is designed according to at least one of the preceding claims 1 - 6.

## Revendications

1. Unité de résonateur (16) pour le chauffage de récipients, avec un compartiment de résonateur (40), avec une première ouverture (42) pour la réception d'un récipient (10) à une position définie et pour le chauffage du récipient (10) au moyen de micro-ondes couplées dans le compartiment de résonateur (40) et avec une deuxième ouverture (44) au moyen de laquelle les micro-ondes sont couplées dans le compartiment de résonateur (40), la géométrie du compartiment de résonateur (40) étant adaptée par rapport à la position définie du récipient (10) dans la première ouverture (42) avec un dispositif d'ajustement de géométrie, de telle manière qu'un champ électrique généré dans le compartiment de résonateur (40) lors d'un mode de service soit symétrique par rapport au récipient ou que l'impédance de l'unité de résonateur (16) chargée d'un récipient (10) soit à peu près constante pour des récipients (10) de conceptions géométriques différentes,
**caractérisé en ce que**
le dispositif d'ajustement de géométrie du compartiment de résonateur (40) est au moins une cheville métallique (52) qui avance dans le compartiment de résonateur (40) ou le dispositif d'ajustement de géométrie du compartiment de résonateur (40) est un dispositif diélectrique compensateur (46) qui est disposé dans le compartiment de résonateur (40), le dispositif diélectrique compensateur (46) étant une cheville diélectrique (46b) qui avance dans le compartiment de résonateur (40).

2. Unité de résonateur (16) selon la revendication 1, dans laquelle les récipients (10) sont différents entre eux, par leurs matériaux.

3. Unité de résonateur selon l'une des revendications 1 et 2, dans laquelle l'élément diélectrique de compensation (46) est fait en polytétrafluoroéthylène ou en polypropylène.

4. Unité de résonateur selon la revendication 1, dans laquelle la cheville diélectrique (46b) et/ou la ou les chevilles métalliques (52) peuvent être engagées suivant des longueurs variable dans le compartiment de résonateur (40).

5. Unité de résonateur selon la revendication 1, dans laquelle la deuxième ouverture (44) est un diaphragme variable ou un diaphragme remplaçable.

6. Unité de résonateur selon la revendication 1, dans laquelle le dispositif d'ajustement de la géométrie du compartiment de résonateur (40) est cause d'une géométrie excentrée du compartiment de résonateur (40) par rapport à la position définie du récipient (10) dans la première ouverture (42).

7. Procédé d'expansion, dans lequel un récipient est fabriqué par expansion d'une préforme (10) du récipient chauffé par des micro-ondes dans une unité de résonateur (16), dans lequel l'unité de résonateur (16) comporte
un compartiment de résonateur, présentant une première ouverture pour la réception d'un récipient (10) à une position définie et pour le chauffage du récipient (10) au moyen de micro-ondes couplées dans le compartiment de résonateur (40), et
un dispositif d'ajustement de la géométrie du compartiment de résonateur (40) par rapport 'à la position définie du récipient (10) dans la première ouverture, de telle manière qu'un champ électrique généré soit symétrique par rapport au récipient ou que l'impédance de l'unité de résonateur (16) chargée d'un récipient (10) soit à peu près constante pour des récipients (10) de conceptions géométriques différentes,
**caractérisé en ce que**
le dispositif d'ajustement de géométrie du compartiment de résonateur (40) est au moins une cheville métallique (52) qui avance dans le compartiment de résonateur (40) ou le dispositif d'ajustement de géométrie du compartiment de résonateur (40) est un dispositif diélectrique compensateur (46) qui est disposé dans le compartiment de résonateur (40), le dispositif diélectrique compensateur (46) étant une cheville diélectrique (46b) qui avance dans le compartiment de résonateur (40).

8. Dispositif pour le chauffage de récipients (10), comportant au moins une unité génératrice de micro-ondes (4) destinée à générer un champ électromagnétique alternatif sous forme de micro-ondes, un dispositif conducteur (6) pour la transmission des micro-ondes générées par l'unité génératrice de micro-ondes (4) vers une unité de résonateur (16), et un dispositif de transport (2) pour le transport des récipients (10) vers l'unité de résonateur,
**caractérisé en ce que**
l'unité de résonateur (16) est réalisée selon au moins une des revendications précédentes 1 à 6.
